# EUROPEAN PATENT APPLICATION

(11) **EP 1 914 938 A1**
(43) Date of publication of application: **23.04.2008**
(21) Application number: 06775303.8
(22) Date of filing: 07.08.2006
(51) Int. Cl.: H04L 12/24

(54) **A METHOD OF PHYSICAL AUTHENTICATION AND A DIGITAL DEVICE**

(30) Priority: 11.08.2005 CN 200510090183
(71) Applicant: Beijing Watch Data System Co. Ltd., Beijing 100015 (CN)
(72) Inventor: GAO, Xiang, Beijing 100015 (CN); WANG, Guorong, Beijing 100015 (CN)
(74) Representative: Kuhnen & Wacker
(86) International application number: PCT/CN2006/001985
(87) International publication number: WO 2007/016867

(57) **Abstract**

The present invention relates to a method of physical authentication and an electronic device for implementing the method. According to the method of the present invention, using an operation control list stored in an electronic device, a valid user authenticates the operation implemented by the electronic device in a physical mode, by which a binding relationship is established between a valid user and the electronic device. The establishment of the binding relationship resolves not only the problem of identity authentication and exchange authentication in network exchange but also that of anti-virus of data storage device, thus the security of the user data is ensured. The method of the present invention comprises setting a corresponding relationship between the operation command and a physical authentication mode and using the physical authentication mode to implement an authentication when the operation command is performed. The electronic device comprises a microprocessor, an operation communication interface, a smartcard chip and an authentication implementing mechanism.

## Description

### FIELD OF THE INVENTION

The present invention relates to the field of computer and communication security. In particular, the present invention relates to a method of physical authentication and an electronic device, by which a valid user can use an operation control list stored in a security authentication device to authorize operations implemented by the security authentication device in a physical mode.

### DESCRIPTION OF THE RELATED ART

In any network exchange environments, security problems mainly occur in an information source, a channel and an information sink. In other words, security problems mainly exist in a server, a network and a client-end. At present, the security of a server can be ensured by technical measures such as physical control, security management, advanced hardware platform and operating system, and system and network security software and device. A data encryption/decryption technology based on cryptography method can guarantee the security of data transmission in network and also has a very good effect. A client-end refers to applications installed in a user's computer and corresponding software and hardware operating environment. Network management system can not control and check the user's computer. In addition, a user at the client-end in network environment obtains services via the network, instead of the traditional face to face service mode. Such change in the service modes causes the user of the client-end to be altered from a natural person to a "network person". Therefore, the validity of the identity of the "network person" at the client-end and that of exchange are important factors for ensuring the security of the client-end.

In the conventional art, technologies for implementing a validity authentication to the identity of a user via the client-end mainly comprise a smart card based technology, a password verification technology similar to electronics devices such as a USB KEY, and a digital signature technology of PKI (Pubic Key Infrastructure) and so on. Although the above-mentioned technologies can realize an identity authentication to users, it can not resolve the problem of the user's authentication to exchange validity. That is, it can not solve the problem of a binding between a valid user and an electronic device. "Trojan house" program stayed in the user computer can obtain the valid password by monitoring the operation of applications at the client-end in a condition that the valid user is completely unaware of it. The program can also start up an electronic device to generate valid digital signature to implement a network exchange. Thus, series security hidden troubles exist.

In addition, when existing data storage devices, such as a mobile hard disc or a USB memory stick, are connected to a computer, spyware in the computer can secretly read contents in the data storage devices under the unawareness of the user, or write contents into the data storage devices secretly. Thus, the data storage devices may become a virus spreader.

### SUMMARY OF THE INVENTION

In order to overcome the shortcomings in the conventional technology, one aspect of the present invention is to provide a method of physical authentication and an electronic device, by which a valid user can operate a security authentication device in a physical mode to implementing an authentication to an exchange or to a data reading/writing operation.

A method of physical authentication adapted for a system for a client-end to implement an operation command by an electronic device, wherein a corresponding relationship between the operation command and a physical authentication mode is set, and when a security computing operation is implemented, the method comprises:
a step S1 of the client-end sending a first operation command;
a step S2 of the system querying the relationship between the operation command and the physical authentication mode to obtain a first physical authentication mode corresponding to the first operation command;
a step S3 of a user initiating the first physical authentication operation to a physical authentication implementing mechanism, if it passed the first physical authentication, the procedure going to step S4, otherwise the procedure being ended;
a step S4 of implementing the first operation command.

The corresponding relationship between the operation command and a physical authentication mode is an operation control list in which content of the operation command and corresponding physical authentication mode are set.

The operation control list is a two-dimensional one in which rows and columns thereof correspond respectively to the content of the operation command and the corresponding physical authentication mode.

The operation control list further comprises a validity judgment rule of physical authentication operation.

The operation control list further comprises a maximum delay waiting time or a valid cut-off time of the physical authentication operation.

In the step S1, the operation command comprises a security computing command and a data reading/writing command. The security computing command comprises data encryption, data decryption, digital signature and digital abstract. The data reading/writing command comprises those reading/writing commands prescribed by the SCSI (Small Computer Systems Interface).

In the steps S2 and S3, the physical authentication mode comprises a biological feature authentication or an operation feature authentication.

The biological feature authentication comprises a fingerprint feature authentication, a pupil feature authentication, or a lip feature authentication.

The operation feature authentication comprises a key pressing operation or a switch sliding operation.

The step S3 further comprises:
a step S31 of the user initiating a first physical authentication information to the physical authentication implementing mechanism;
a step S32 of the physical authentication implementing mechanism receiving the first physical authentication information and comparing the first physical authentication information with the stored corresponding physical authentication information to determine whether they are consistent, if YES, the procedure going to S33, if NO, the procedure going to S34;
a step S33 of the user passing a first physical authentication;
a step of S34 of the user being denied to pass the first physical authentication.

The step S2 also comprises a step of system sending physical authentication prompt information to the user.

The physical authentication prompt information may be sound prompt information, touch prompt information or vision prompt information.

The first operation command may be:
one operation command; or
a combination of a plurality of operation commands; or
an operation command containing one or a plurality of key data; or
a combination of operation commands containing one or a plurality of key data.

The corresponding relationship between the operation command and the physical authentication mode may be:
one operation command corresponding to one physical operation or a plurality of physical operations; or
a combination of a plurality of operation commands corresponding to one operation or a plurality of physical operations;
one operation command or a plurality of operation commands and one or a plurality of key data corresponding jointly to one physical operation or a plurality of physical operations; or
one keyword or a plurality of keywords corresponding to one physical operation or a plurality of physical operations.

An electronic device connected to a client-end, wherein it comprises:
an operation computing module for implementing an operation command;
a data storage module for storing user data and application data;
an operation control corresponding relationship module provided with a corresponding relationship between the operation command and a physical authentication mode;
a physical authentication module for the user to input physical authentication information and implementing a physical authentication to the information, and sending an authentication result to a processing module;
the processing module being used for receiving operation command information sent by the client-end and requesting for a corresponding physical authentication mode from the operation control corresponding relationship module based on the operation command information, receiving the authentication result from the physical authentication module, sending a command for the operation computing module to implement corresponding operations, and receiving an implementing result of the operation computing module.

The physical authentication module comprises a physical authentication implementing mechanism and an authentication comparing module.

The physical authentication implementing mechanism is used for receiving physical authentication information inputted by the user and sending the physical authentication information to the authentication comparing module.

The authentication comparing module is used for comparing the physical authentication information inputted by the user with the system stored information to obtain an authentication result.

The operation control corresponding relationship module comprises:
an operation control list storage module which is stored with an operation control list;
an operation control list query module which sends a query request to operation control list storage module according to the request sent by the processing module, and sending a query result to the processing module.

The processing module further comprises a communication interface module which is connected to the processing module and used for processing the information interaction between the processing module and the client-end.

The communication interface module may be a USB module, a high speed serial interface module, a parallel interface module or a firewire (IEE1394) interface module.

The physical authentication module comprises one of or a combination of the following:
a biological feature authentication module and an operation feature authentication module.

The electronic device further comprises a physical authentication operation prompt module which is connected to the processing module and used for prompt the user to implement a physical authentication on the physical authentication module.

The physical authentication operation prompt module comprises one of or a combination of the following:
a sounding device, an illuminating device and a vibrating device.

The data storage module may be an EPROM, an EEPROM, a smart card chip, a Non-volatile memory (NAND FLASH), a hard disc or a movable hard disc.

The advantages of the present invention are described as follows. A binding relationship is established between a valid user and a physical authentication device though different physical operation states to ensure the security of a client-end in a network environment. The establishment of the binding relationship resolves not only the problem of identity authentication and exchange authentication in network exchange but also that of anti-virus of data storage device. Such identity authentication and exchange authentication ensures that a valid user is making an exchange, instead of just ensuring that a valid device is making the exchange. Thus, each exchange of a valid device is guaranteed to be authorized and authenticated by a valid user, which ensures the security and validity of the whole network exchange system.

### BRIEF DESCRIPTION OF THE DRAWINGS

The invention will be readily understood by the following detailed description in conjunction with the accompanying drawings, wherein like reference numerals designate like structural elements, and in which:
Figure 1 is a view showing logic components of the electronic device of the present invention;
Figure 2 is a schematic view showing implementing components of the electronic device of the present invention;
Figure 3 is a main flowchart of the present invention;
Figure 4 is a flowchart of an embodiment 1 of the present invention;
Figure 5 is a flowchart of an embodiment 2 of the present invention;
Figure 6 is a flowchart of an embodiment 3 of the present invention;
Figure 7 is a flowchart of an embodiment 4 of the present invention; and
Figure 8 is a flowchart of an embodiment 5 of the present invention.

### DETAILED DESCRIPTION OF THE PREFERRED EMBODIMENTS

The present invention will be described in detail with reference to the figures and embodiments.

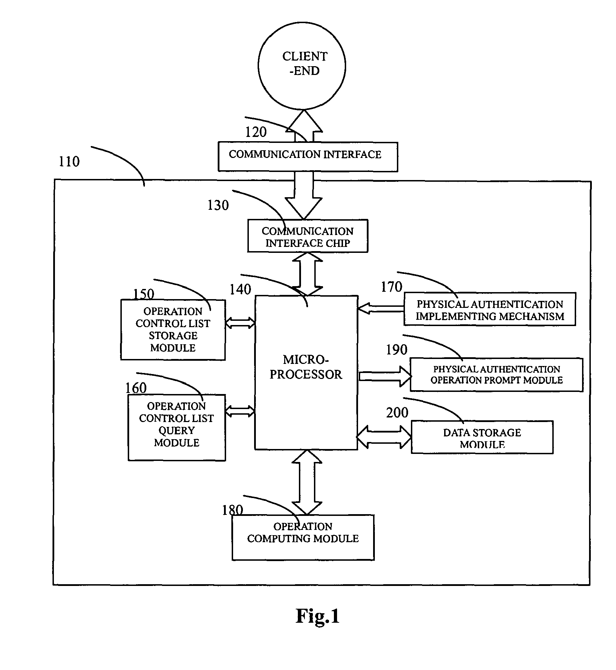

Please refer to Figure 1 which is a view showing logic components of the electronic device of the present invention. Hardware system 110 of the electronic device of the present invention comprises the following components:
1. A microprocessor 140.
   The microprocessor 140 is used for receiving operation command information sent by a client-end and returning a processing result to the client-end, and also for judging the validity of a physical authentication operation provided by the user. In an authentication mode of biological feature identification, the processor 140 reads stored biological feature identification comparability information of physical authentication from a position designated by an operation control list storage module and compares it with biological feature identification information inputted by a comparison user to obtain an authentication result. In an authentication mode of operation feature identification, operation feature identification information inputted by the user is compared with validity judgment rule prescribed by the operation control list storage module to obtain an authentication result. In an authentication mode of combined biological feature identification and operation feature identification, the biological feature identification and the operation feature identification are performed as the above steps according to sequence prescribed by the operation control list storage module to obtain an authentication result.
2. An operation command communication interface 120 and a communication interface chip 130 which has one end connected to the processor 140 and the other end connected to the client-end. They are used for the exchange of operation commands and confirmation information between the processor 140 and the client-end, establishment of data transfer channel and implementing of data exchange. It may comprise any interface manners which can meet the requirement of communication performance, such as USB interface, serial interface, parallel interface and firewire (IEE1394) interface.
3. An operation control list storage module 150 which is connected to the microprocessor. It may be a firmware memory, such as any suitable one selected from a ROM, an EPROM, an EEPROM or a non-volatile memory (NAND FLASH). However, it is not limited to such kind of memory. It also can be a smart card chip which is used for storing the operation control list for performing security authentication operations.
4. An operation control list query module 160 which is connected to the microprocessor and queries an operation command issued by the client-end through operation command communication interface and judges whether the operation command shall be subject to a physical authentication operation.
5. A physical authentication implementing mechanism 170 which comprises a fingerprint collector, a key pressing device, a switch sliding device and other devices. It is connected to the microprocessor for inputting various operations of security authentication by the user in a physical mode.
6. An operation computing module 180. It is connected to the microprocessor for implementing operation commands designated by the operation control list and for controlling the security update of the operation control list.
7. A physical authentication operation prompt module 190 which comprises a LED, a buzzer and other devices. It is connected to the microprocessor for prompting the user to perform a physical authentication operation on the physical authentication implementing mechanism.
8. A data storage module 200 which is connected to the microprocessor and is used for storing user data and application data. It may be any suitable kind of memory selected from an EPROM, an EEPROM or a Non-volatile memory (NAND FLASH), a hard disc or a movable hard disc, but is not limited thereto. In the electronic device of the present invention, the communication interface chip 130, the operation control list storage module 150, the operation control list query module 160 and the operation computing module 180 can be partly or completely contained in the microprocessor 140. The physical authentication operation prompt module 190 can be omitted according to the physical authentication operation prompt mode described in the operation control list.

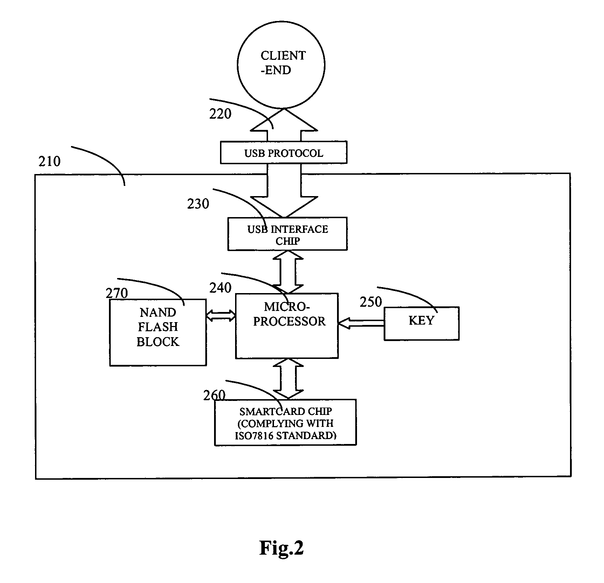

Please refer to Figure 2 which describes an embodiment of the electronic device of the present invention. The hardware system 210 of the physical authentication electronic device is described as follows.

The electronic device is connected to the client-end via a USB communication protocol 220, and a USB interface chip 230 and a microprocessor 240 form a data transmission channel which can communicate with the client-end. The client-end transfers data to the microprocessor 240 via the USB communication protocol 220 and the USB interface chip 230. The microprocessor 240 firstly performs a data integrity check to the received data packet according to the USB communication protocol and then obtains an operation command issued from the client-end, such as a smart card APDU (Application Protocol Data Unit) command which complies with ISO7816 standard and a reading/writing command which complies with ISO7816 standard.

The microprocessor 240 reads an operation control list from a smart card chip 260 and queries the command in a one-by-one comparison mode in the operation control list according to a reading/writing operation code prescribed by an APDU command format or a SCSI, and judges whether this command shall be subject to a physical authentication operation. If the physical authentication operation is not required, the microprocessor 240 directly sends the APDU command to the smart card chip 260 which returns a result back to the microprocessor 240 after it completing a security computing operation designated by the APDU command; or the microprocessor 240 directly implements a reading/writing operation to a NAND FLASH 270 according to SCSI provision, and transfers the implementing result to the client-end via the USB interface chip 230 in accordance with the USB communication protocol 220. If the command requires a physical authentication operation, the microprocessor 240 obtains simultaneously a designated physical authentication operation and its attribute information from the operation control list. For example, the physical authentication operation is "pressing key"; the judgment criteria for the valid operation is the key pressing times equal to 1; maximum delay waiting time is 500ms; the valid closing date is "December 31, 2010"; and the physical authentication operation prompt mode is "client-end".

According to the physical authentication operation prompt mode described in the operation control list, the microprocessor 240 obtains the physical authentication operation designated by the command and its attribute information from the operation control list and sends data to the client-end via the USB interface chip 230 in accordance with the USB communication protocol 220, and then waits for receiving the confirmation information returned from the client-end. After the microprocessor 240 receives the confirmation information of the client-end, it checks according to the description of the operation control list whether the user performs a valid key pressing operation within 500ms. If the key pressing operation remains valid with valid time, the microprocessor 240 sends the APDU command to the smart card chip 260 which returns the implementing result to the microprocessor 240 after it completes the security computing operation designated by the APDU command. Or the microprocessor 240 implements a writing/reading operation to the NAND FLASH 270 according to SCSI. Otherwise the microprocessor 240 refuses to implement the command. The microprocessor 240 sends data to the client-end via the USB interface chip 230 in accordance with the USB communication protocol 220.

An embodiment of a physical authentication method of the present invention is described hereinafter.

In order to realize a binding between a valid user and a physical authentication device, the operation control list of the present invention is shown in the following table 1.

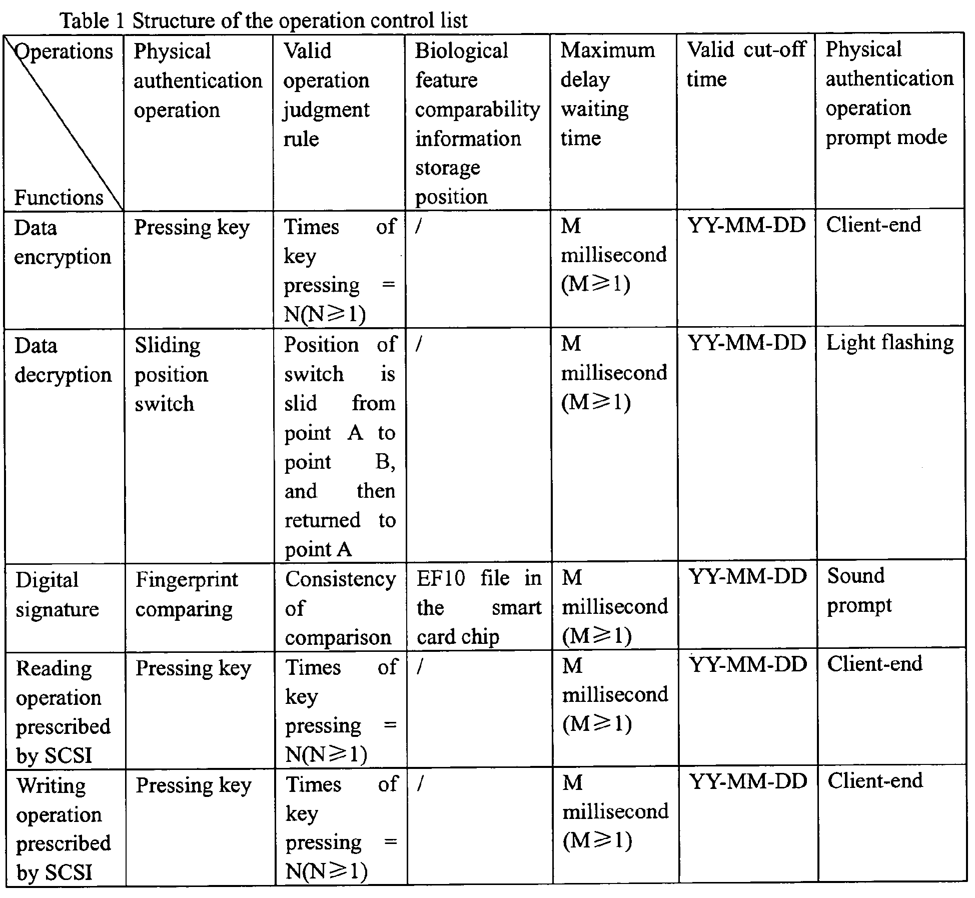

The table 1 shows the operation command content and corresponding physical authentication mode. The operation command comprises: a security computing whose content may be data encryption, data encryption, digital signature, digital abstract and so on; and data reading/writing whose content may be reading/writing operations prescribed by SCSI. The physical authentication mode comprises an operation feature identification authentication, biological feature identification authentication or combination thereof. The operation feature identification authentication comprises a key sliding position switch. The biological feature identification authentication comprises a fingerprint comparison, a pupil comparison, a lip feature authentication and so on.

The table 1 also comprises a validity judgment rule of physical authentication operation, such as times of key pressing.

The table 1 also comprises a biological feature comparison information storage position, such as EF 10 file in the smart card chip.

The table 1 also comprises a maximum delay waiting time or a valid cut-off time.

The corresponding relationship between the above-mentioned operation command and physical authentication mode can also be subject to some enhancement processing. The table 1 shows a relationship in which one operation command corresponds to one physical operation. In practical applications, one operation command can correspond to a plurality of physical operations; or a plurality of operation commands can correspond to one physical operation or a plurality of physical operations; or one operation command or a plurality of operation commands, together with one key word or a plurality of key words, can commonly correspond to one physical operation or a plurality of physical operations; or one key word or a plurality of key words can correspond to one physical operation or a plurality of physical operations. These relationships can enhance the flexibility of service settings.

Specific implementation of table 1 will be described in detail with examples.

Within valid time, when the client-end requests the physical authentication device to complete data encryption computing, only when the physical authentication device receives one time of valid key pressing operation of a valid user within 500ms, it performs data encryption computing operation and returns the computing result to the client-end.

Similarly, within valid time, when the client-end requests the physical authentication device to complete data decryption computing, only when the physical authentication device receives one time of valid position switch sliding operation of a valid user within 500ms, it performs data decryption computing operation and returns the computing result to the client-end.

Within valid time, when the client-end requests the physical authentication device to complete data signature computing, only when the physical authentication device completes fingerprint collection and comparison to a valid user within 1000ms and validates the comparison, it performs digital signature computing operation and returns the computing result to the client-end.

The table 1 is only an example of the operation control list for illustrative purpose. It is not intent to limit the corresponding relationship between the security computing implemented by the physical authentication device and the physical authentication operation provided by the valid user thereto.

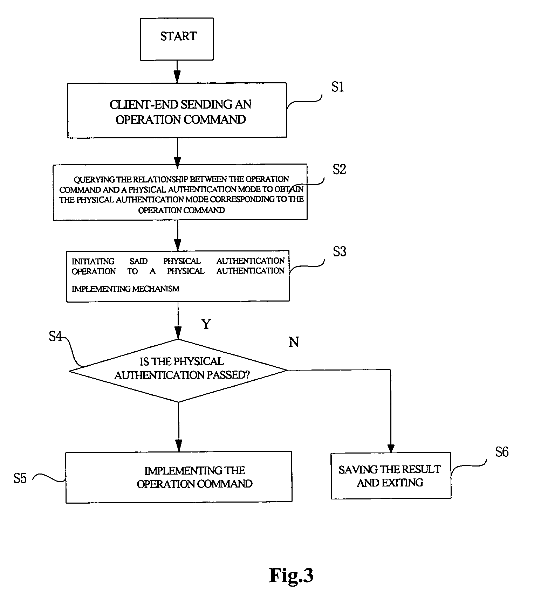

Please refer to Figure 3 which is a main flowchart of the present invention. In the technical scheme of the present invention, the client-end sends a security computing command to the electronic device to request for performing security computing. According to the physical authentication method of the present invention, the physical authentication to the security computing command comprises:
a step S 1 of the client-end sending an operation command;
a step S2 of querying the relationship between the operation command and a physical authentication mode to obtain the physical authentication mode corresponding to the operation command;
a step S3 of a user initiating said physical authentication operation to a physical authentication implementing mechanism;
a step S4 of judging whether the physical authentication is passed, if yes, the procedure going to step S5, otherwise the procedure going the step S6 to be ended;
a step S5 of implementing the operation command;
a step S6 of saving the result and exiting to end the procedure.

Hereinafter, the scheme of the present invention will be described in detail in accompany with a specific security computing command operation procedure of the electronic device.

### Embodiment 1

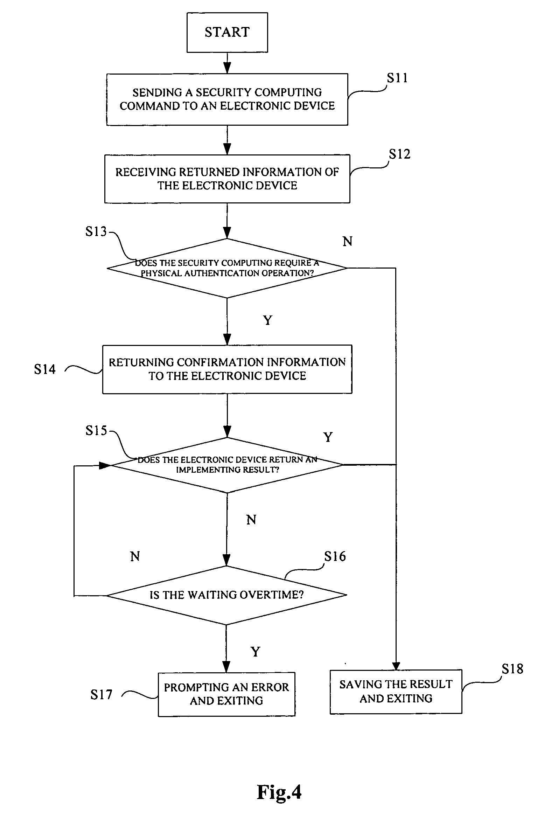

Figure 4 is a flowchart of an embodiment 1 of the present invention. As shown in Figure 4, the method comprises:
a step S11 of a client-end sending a security computing command to an electronic device;
a step S12 of the client-end receiving returned information of the electronic device;
a step S13 of the client-end judging whether the security computing requires a physical authentication operation, if yes, the procedure going to step S 14, otherwise the procedure going to step S 18;
a step S 14 of the client-end sending confirmation information to the electronic device;
a step S 15 of the client-end judging whether the electronic device returns an implementing result, if yes, the procedure going to S 18, otherwise the procedure going to step S16;
a step S16 of the client-end judging whether the waiting is overtime, if yes, the procedure going to S 17, otherwise the procedure returning to step S 15;
a step S 17 of the client-end prompting an error and exiting;
a step S 18 of the client-end saving the result and exiting.

In the embodiment 1, the client-end judges whether the security computing operation requires a physical authentication operation according to the returned information of the electronic device. If the physical authentication operation is required, the confirmation information is returned to the electronic device. The electronic device performs the physical authentication firstly and then implements the security computing operation. In practice, the security computing command in the step S11 can be one data encryption command or a combination of a data encryption command, a data encryption command and a digital signature command. It also can be a combination of digital signature command and key words in the signature data item, such as transferred money. The physical authentication operation in the step S13 can be one time of key pressing operation. It also can be one time of key pressing operation firstly and then a fingerprint comparison operation.

### Embodiment 2

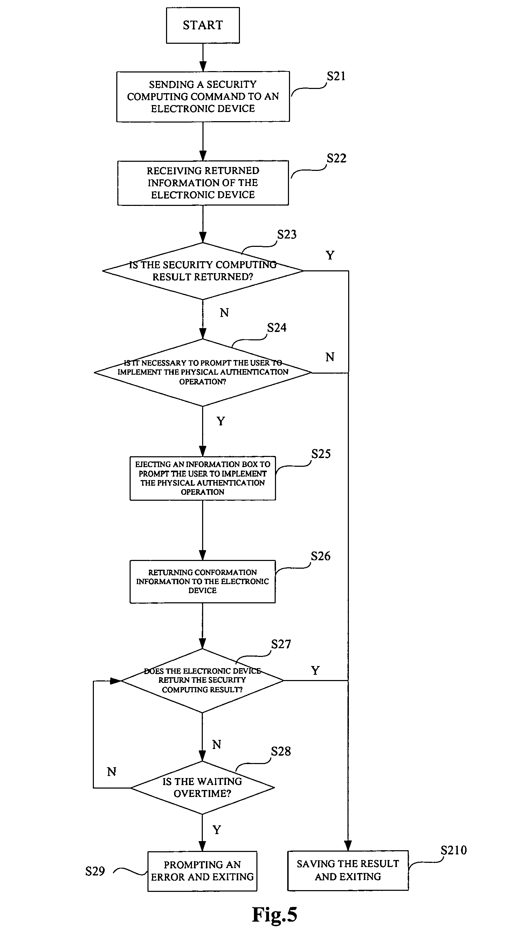

Figure 5 is a flowchart of an embodiment 2 of the present invention. As shown in Figure 5, the method comprises:
a step S21 of a client-end sending a security computing command to an electronic device;
the client-end sends the security computing command to the electronic device, and transfers a security computing request command to the microprocessor of the electronic device via a communication interface.
a step S22 of the client-end receiving returned information of the electronic device;

The microprocessor of the electronic device queries the security computing command in the operation control list and judges whether the command shall be subject to a physical authentication. If not, the microprocessor directly performs the command and transfers an implementing result to the client-end. If the command requires the physical authentication, the microprocessor receives simultaneously the state of the physical authentication operation and the attribute information thereof from the operation control list. The microprocessor sends the state of the physical authentication operation and the attribute information thereof to the client-end via the communication interface and waits for receiving confirmation information returned from the client-end.
a step S23 of the client-end judging whether the security computing result is returned, if yes, the procedure going to step S210, otherwise the procedure going to step S24;
a step S24 of the client-end judging whether it is necessary to prompt the user to implement the physical authentication operation;

If the system is provided with a setting for prompting the user to implement the physical authentication operation, the procedure goes to step S25, otherwise the procedure goes to step S26.
a step S25 of the client-end ejecting an information box to prompt the user to implement the physical authentication operation;
If the system is provided with an information box to prompt the user to implement the physical authentication, then the related information box is ejected to prompt the user to implement the physical authentication operations.
a step S26 of the user implementing related physical authentication operations and returning conformation information to the electronic device;

According to the prompting, the user implements related physical authentication operation by the physical authentication implementing module of the electronic device. If the authentication is passed, confirmation information is returned to the electronic device. After the microprocessor of the electronic device receives the confirmation information of the client-end, it checks the state of the physical authentication operation and judges whether the authentication operation is valid. If the authentication operation is valid, the security operation command is implemented. If the authentication operation is invalid, the command is denied.
a step S27 of the client-end judging whether the electronic device returns the security computing result, if yes, the procedure going to step S210, if not, the procedure going to step S28;
a step S28 of the client-end judging whether the waiting is overtime, if yes, the procedure going to S29, otherwise the procedure returning to step S27;

If the electronic device does not return the security computing result within valid time, the procedure goes to step 29.
a step S29 of the client-end prompting an error and exiting;
a step S210 of the client-end saving the result and exiting.

In the embodiment 2, technical scheme relating to prompting the user to implement the physical authentication operation is added.

### Embodiment 3

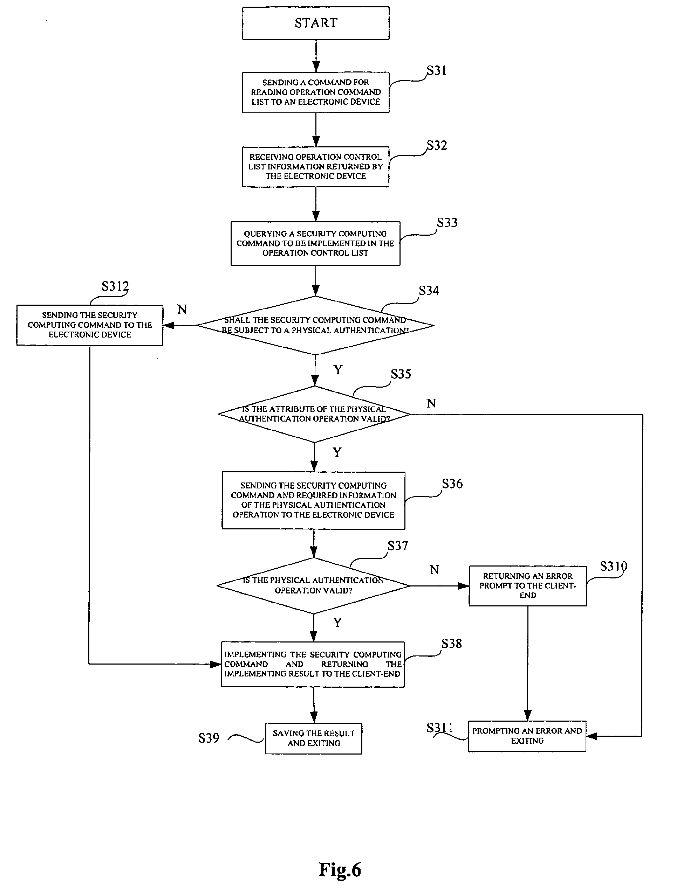

Figure 6 is a flowchart of an embodiment 3 of the present invention. As shown in Figure 6, the method comprises:
a step S31 of a client-end sending a command for reading operation command list to an electronic device;
a step S32 of the client-end receiving operation control list information returned by the electronic device;
a step S33 of the client-end querying a security computing command to be implemented in the operation control list;
a step S34 of the client-end judging whether the security computing command shall be subject to a physical authentication, if yes, the procedure going to step S35, otherwise the procedure going to step S312;
a step S35 of the client-end judging whether the attribute of the physical authentication operation is valid, if yes, the procedure going to step S36, otherwise the procedure going to step S311;
a step S36 of the client-end sending the security computing command and required information of the physical authentication operation or that not requiring the physical authentication operation to the electronic device;
a step S37 of the electronic device judging whether the physical authentication operation required by the security computing command is valid, if yes, the procedure going to step S38, otherwise the procedure going to step S310;
a step S38 of the electronic device implementing the security computing command and returning the implementing result to the client-end;
a step S39 of the client-end saving the result and exiting the procedure;
a step S310 of the electronic device returning an error prompt to the client-end;
a step S311 of the client-end prompting an error and exiting the procedure;
a step S312 of the client-end sending the security computing command to the electronic device and going to the step S38.

In the embodiment 3, the client-end directly reads the control list information from the electronic device and queries the operation control list to determine whether the security computing operation requires a physical authentication operation. In addition, a step of verifying whether the attribute of the physical authentication operation is valid.

### Embodiment 4

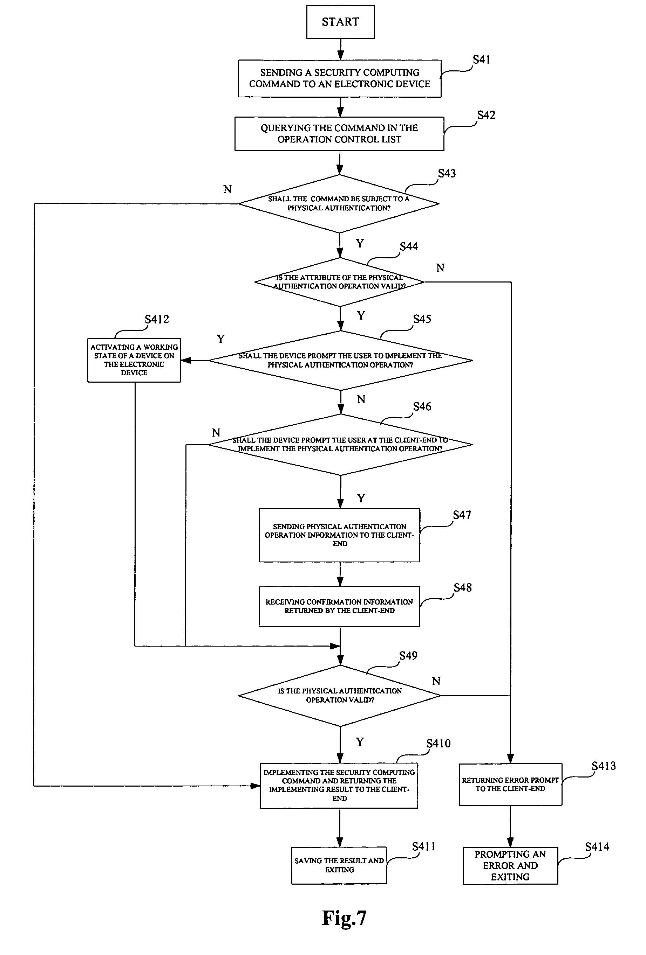

Figure 7 is a flowchart of an embodiment 4 of the present invention. As shown in Figure 7, the method comprises:
a step S41 of a client-end sending a security computing command to an electronic device;
a step S42 of the electronic device querying the security computing command in the operation control list;
a step S43 of the electronic device judging whether the security computing command shall be subject to a physical authentication, if yes, the procedure going to step S44, otherwise the procedure going to step S410;
a step S44 of the electronic device judging whether attribute of the physical authentication operation is valid, if yes, the procedure going to step S45, otherwise the procedure going to step S413;
a step S45 of the electronic device judging whether it shall prompt the user at the device to implement the physical authentication operation, if yes, the procedure going to step S412, otherwise the procedure going to step S46;
a step S46 of the electronic device judging whether it shall prompt the user at the client-end to implement the physical authentication operation, if yes, the procedure going to step S47, otherwise the procedure going to step S49;
a step S47 of the electronic device sending physical authentication operation information required by the command to the client-end;
a step S48 of the electronic device receiving confirmation information returned by the client-end;
a step S49 of the electronic device judging whether the physical authentication operation required by the security computing command is valid, if yes, the procedure going to step S410, otherwise the procedure going to step S413;
a step S410 of the electronic device implementing the security computing command and returning the implementing result to the client-end, and the procedure going to step S411;
a step S411 of the client-end saving the result and exiting the procedure;
a step S412 of the electronic device activating a working state of a physical authentication operation prompt module device on it, and the procedure going to step S49;
if the physical authentication operation prompt mode set by the system is light flashing, then the LED on the electronic device is on and off in a fixed frequency;
a step S413 of the electronic device returning error prompt to the client-end;
a step S414 of the client-end prompting an error and exiting the procedure.

In the embodiment 4, a step of prompting at the electronic device or at the client-end the user to implement the physical authentication operation is added.

### Embodiment 5

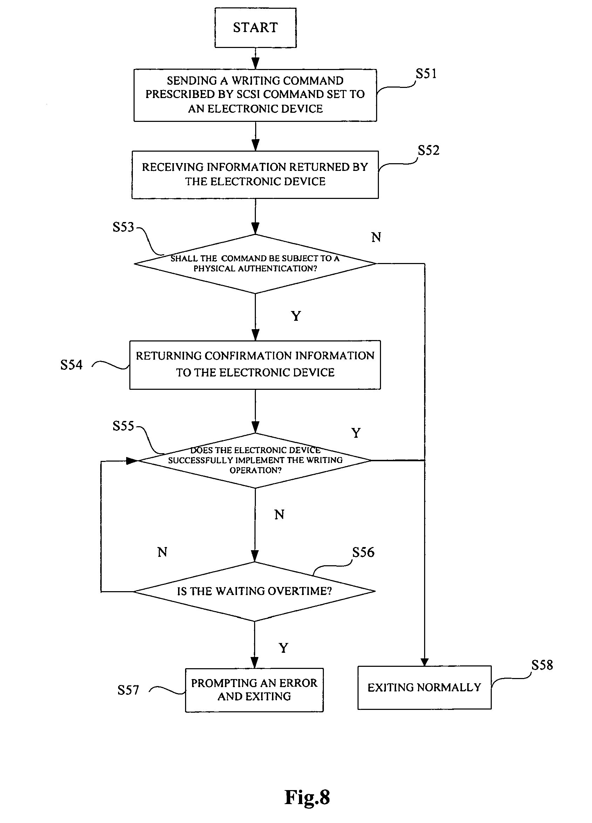

Figure 8 is a flowchart of an embodiment 5 of the present invention. As shown in Figure 8, the method comprises:
a step S51 of a client-end sending a writing command prescribed by SCSI to an electronic device;
a step S52 of a client-end receiving information returned by the electronic device;
a step S53 of the client-end judging whether the writing command is required to be subject to a physical authentication, if yes, the procedure going to step S54, otherwise the procedure going to step S58;
a step S54 of the client-end sending confirmation information to the electronic device;
a step S55 of the client-end judging whether the electronic device successfully implements the writing operation, if yes, the procedure going to step S58, otherwise the procedure going to step S56;
a step S56 of the client-end judging whether the waiting is overtime, if yes, the procedure going to S57, otherwise the procedure returning to step S55;
a step S57 of the client-end prompting an error and exiting;
a step S58 of the client-end exiting normally.

In the embodiment 5, the client-end judges whether the writing operation shall be subject to the physical authentication according to information returned by the electronic device. If the physical authentication is required, the confirmation information is returned to the electronic device. The electronic device implements firstly the physical authentication, and then the writing operation.

### Embodiment 6

In a network exchange environment, a user at client end wants to transfer 1,000 RMB yuan through a network bank from a bank account of himself/herself to the one designated by a power supply bureau to pay the power supply fee of that month. The payment can be realized by the following steps:
Firstly, the user login the network bank service at the client-end through the physical authentication device. After traditional ID authentications, such as password authentication and data certificate validity authentication, are completed, the user applies for the transfer of 1,000 RMB.
Secondly, the client-end uploads the application of the user to a network bank server. According to the application of the user, the network bank server generates key data of the network exchange, returns to key data to the client end, and requires the user to perform a digital signature conformation to the key data.
Thirdly, the client-end sends a security computing command which performs the digital signature conformation to the key data to the physical authentication device. According to the physical authentication operation prompt information sent by the client-end or the physical authentication device, the user implements a physical authentication operation on a physical authentication implementing mechanism of the physical authentication device. After the user provides a valid physical authentication operation, the physical authentication device carries out the digital signature computing to the key data and feeds back the computing result to the client-end.
Finally, the client-end uploads the obtained digital signature data to the network bank server which completes the designated transfer exchange after it verifies the validity of the user's digital signature data returned by the client-end.

In the embodiment 6, the electronic device according to the present invention is applied in the network bank service, which is described with reference to a specific network bank service. With the physical authentication method, a valid user authorized operations of the security authentication in a physical mode using the operation control list stored in the security authentication device. Thus it can be seen, the security of the exchange is greatly improved. In network bank applications, in order to enhance the flexibility of service settings, the operation control list can set corresponding physical authentication operation according to the exchange sign key word corresponding to the type of the network exchange applied by the user (for example, the exchange sign key word corresponding to the transfer exchange is A5). In practical use, when the client-end sends an operation command with an exchange sign key word to the physical authentication device, the user implements a physical authentication operation on the physical authentication implementing mechanism of the physical authentication device according to the physical authentication operation prompt information sent by the client-end or the physical authentication device. Only when the user provides a valid physical authentication operation, the next procedure can be continued.

It should be noted that the embodiments above are only for the illustration of the present invention and not intended to limit the present invention. Therefore, though the present invention has been describe in detail with reference to the embodiments above, it should be understood by those skilled in the art, that any modification or equivalent replacement may be made to the present invention without departing from the spirit and scope of the present invention that are set forth in the appended claims.

## Claims

1. A method of physical authentication adapted for a system for a client-end to implement an operation command by an electronic device, **characterized in that** a corresponding relationship between the operation command and a physical authentication mode is set, and when a security computing operation is implemented, the method comprises:
a step S1 of the client-end sending a first operation command;
a step S2 of the system querying the relationship between the operation command and the physical authentication mode to obtain a first physical authentication mode corresponding to the first operation command;
a step S3 of a user initiating the first physical authentication operation to a physical authentication implementing mechanism, if it passed the first physical authentication, the procedure going to step S4, otherwise the procedure being ended;
a step S4 of implementing the first operation command.

2. A method of claim 1, **characterized in that** the corresponding relationship between the operation command and a physical authentication mode is an operation control list in which content of the operation command and corresponding physical authentication mode are set.

3. A method of claim 2, **characterized in that** the operation control list is a two-dimensional one in which rows and columns thereof correspond respectively to the content of the operation command and the corresponding physical authentication mode.

4. A method of claim 3, **characterized in that** the operation control list further comprises a validity judgment rule of physical authentication operation.

5. A method of claim 4, **characterized in that** the operation control list further comprises a maximum delay waiting time or a valid cut-off time of the physical authentication operation.

6. A method of claim 1, **characterized in that** in the step S1, the operation command comprises a security computing command and a data reading/writing command; the security computing command comprises data encryption, data decryption, digital signature and digital abstract; and the data reading/writing command comprises those reading/writing commands prescribed by the SCSI.

7. A method of claim 1, **characterized in that** in the steps S2 and S3, the physical authentication mode comprises a biological feature authentication or an operation feature authentication.

8. A method of claim 7, **characterized in that** the biological feature authentication comprises a fingerprint feature authentication, a pupil feature authentication, or a lip feature authentication.

9. A method of claim 7, **characterized in that** the operation feature authentication comprises a key pressing operation or a switch sliding operation.

10. A method of claim 1, **characterized in that** the step S3 further comprises:
a step S31 of the user initiating a first physical authentication information to the physical authentication implementing mechanism;
a step S32 of the physical authentication implementing mechanism receiving the first physical authentication information and comparing the first physical authentication information with the stored corresponding physical authentication information to determine whether they are consistent, if YES, the procedure going to S33, if NO, the procedure going to S34;
a step S33 of the user passing a first physical authentication;
a step of S34 of the user being denied to pass the first physical authentication.

11. A method of claim 1, **characterized in that** the step S2 also comprises a step of system sending physical authentication prompt information to the user.

12. A method of claim 11, **characterized in that** the physical authentication prompt information is sound prompt information, touch prompt information or vision prompt information.

13. A method of claim 1, **characterized in that** the first operation command is:
one operation command; or
a combination of a plurality of operation commands; or
an operation command containing one or a plurality of key data; or
a combination of operation commands containing one or a plurality of key data.

14. A method of claim 1, **characterized in that** the corresponding relationship between the operation command and the physical authentication mode is:
one operation command corresponding to one physical operation or a plurality of physical operations; or
a combination of a plurality of operation commands corresponding to one operation or a plurality of physical operations;
one operation command or a plurality of operation commands and one or a plurality of key data corresponding jointly to one physical operation or a plurality of physical operations; or
one keyword or a plurality of keywords corresponding to one physical operation or a plurality of physical operations.

15. An electronic device, connected to a client-end, **characterized in that** it comprises:
an operation computing module for implementing an operation command;
a data storage module for storing user data and application data;
an operation control corresponding relationship module provided with a corresponding relationship between the operation command and a physical authentication mode;
a physical authentication module for the user to input physical authentication information and implementing a physical authentication to the information, and sending an authentication result to a processing module;
the processing module being used for receiving operation command information sent by the client-end and requesting for a corresponding physical authentication mode from the operation control corresponding relationship module based on the operation command information, receiving the authentication result from the physical authentication module, sending a command for the operation computing module to implement corresponding operations, and receiving an implementing result of the operation computing module.

16. An electronic device of claim 15, **characterized in that** the physical authentication module comprises a physical authentication implementing mechanism and an authentication comparing module;
the physical authentication implementing mechanism is used for receiving physical authentication information inputted by the user and sending the physical authentication information to the authentication comparing module;
the authentication comparing module is used for comparing the physical authentication information inputted by the user with the system stored information to obtain an authentication result.

17. An electronic device of claim 15, **characterized in that** the operation control corresponding relationship module comprises:
an operation control list storage module which is stored with an operation control list;
an operation control list query module which sends a query request to operation control list storage module according to the request sent by the processing module, and sending a query result to the processing module.

18. An electronic device of claim 15, **characterized in that** the processing module further comprises a communication interface module which is connected to the processing module and used for processing the information interaction between the processing module and the client-end.

19. An electronic device of claim 18, **characterized in that** the communication interface module is a USB module, a high speed serial interface module, a parallel interface module or a firewire (IEE1394) interface module

20. An electronic device of claim 15, **characterized in that** the physical authentication module comprises one of or a combination of the following:
a biological feature authentication module and an operation feature authentication module.

21. An electronic device of claim 15, **characterized in that** the electronic device further comprises a physical authentication operation prompt module which is connected to the processing module and used for prompt the user to implement a physical authentication on the physical authentication module.

22. An electronic device of claim 11, **characterized in that** the physical authentication operation prompt module comprises one of or a combination of the following:
a sounding device, an illuminating device and a vibrating device.

23. An electronic device of claim 15, **characterized in that** the data storage module is an EPROM, an EEPROM, a smart card chip, a Non-volatile memory (NAND FLASH), a hard disc or a movable hard disc.
